# EUROPEAN PATENT SPECIFICATION

(11) **EP 3 037 209 B1**
(45) Date of publication and mention of the grant of the patent: **31.01.2018**
(21) Application number: 15199467.0
(22) Date of filing: 11.12.2015
(51) Int. Cl.: B23Q 7/00, B23Q 7/14, B65G 47/52, B65G 49/06

(54) **PALLET CONVEYANCE SYSTEM AND METHOD**
PALETTENFÖRDERSYSTEM UND VERFAHREN
PROCÉDÉ ET SYSTÈME DE TRANSPORT DE PALETTE

(30) Priority: 22.12.2014 ES 201431901
(43) Date of publication of application: 29.06.2016
(73) Proprietor: Jae Ingenieria y Desarrollos S.L., 26006 Logrono (La Rioja) (ES)
(72) Inventor: CABALLERO LOPEZ, Jaime, 26006 Logroño (La Rioja) (ES)
(74) Representative: Maslanka Kubik, Dorota Irena

(56) References cited:
- EP-A1- 2 195 138
- JP-A- 2012 199 296
- US-A1- 2011 125 307

## Description

### TECHNICAL FIELD

The present invention relates to the field of parts machining, and more specifically to a pallet conveyance system and method for the automatic parts machining.

### PRIOR ART

Parts machining (for example die cutting, trimming, etc.) is required in various fields of the art, for example in manufacturing gaskets for the automotive sector. Said machining can be done manually or automatically.

Manual machining has several drawbacks, such as for example the variability in the quality of the obtained final parts due to human errors made by the operator and the large amount of time required for obtaining machined parts.

Therefore, there are various automatic parts machining systems in the art. These systems generally consist of conveying the part to be machined, held on a pallet, to the station or to the machining stations required. Pallet conveyance systems for automatic parts machining are divided into two main types: single-pallet and multipallet systems.

Single-pallet conveyance systems comprise a linear conveyor on which a base supporting the pallet is located. The pallet in turn serves, as known by the skilled person, for holding, for example, one or two parts to be machined. Machining equipment is located along the path of the conveyor and on both sides thereof. An operator located at one end of the conveyor places the parts to be machined on the pallet, then the conveyor stops said pallet successively at the height of each piece of machining equipment performing various machining operations on the parts. Once the last machining operation is performed, the conveyor takes the pallet back to the operator, who removes the machined parts and places new parts to be machined on the pallet, and the same method is again repeated.

This conventional single-pallet system allows using automated pallets, i.e., comprising a series of elements (such as sensors detecting movement of the part to be machined, encoders verifying that the pallet has not moved laterally, recognizers recognizing the part to be machined, etc.) which allow obtaining satisfactory results. Said elements require connection means (energy train cable carriers, etc.) for being connected to a central automation unit. However, it requires too much time to perform the machining of each part. Therefore, it would be desirable to have a pallet conveyance system that allows reducing the time required by each part machined.

Multipallet conveyance systems solve said drawback by allowing several pallets to be conveyed at a time. Said pallets are all coupled to one and the same conveyor, which successively conveys them along a production line. The pallets are conveyed in a single direction, along a circular production line, or along a linear production line following the closed-loop path of a toothed-belt conveyor.

These multipallet systems reduce the machining time of each part; however they do not allow using the aforementioned automated pallets. In fact, given that these systems always use a rotary conveyance (either in a circular production line or following the rotary motion of a linear toothed-belt conveyor), the use of automated pallets with their corresponding energy train cable carriers will cause entanglements that will prevent the system from operating. Therefore, these multipallet systems are rather limited because they do not allow variations (bending, strain, etc.) of the part to be machined, unwanted movement thereof cannot be detected and it is very complicated to introduce modifications in the systems. Furthermore, if any incident occurs while manufacturing machined parts, the entire system must be emptied out, generating a huge amount of waste.

Patent application US 2011/125307 A1(Dickson CRAIG ALEXANDER [GB] ET AL, 26 May 2011) discloses a product assembly, test, packaging and/or processing system comprising one or a plurality of pallets on which to locate products within the system, a plurality of modules, each of said modules comprising a work surface upon which to mount one or more product assembly, test, packaging or processing stations and a track on which the pallets are mounted and along which the pallet is moved from one tool to another.

Additionally, EP 2 195 138 A1 (FLEXLINK COMPONENTS AB [SE], 16 June 2010) discloses a lifting device for a conveyer system, comprising a housing and a lift head, where the lift head is adapted to hold a pallet, characterized in that the lifting device comprises a linear actuator attached to a lift head, where said linear actuator is adapted to lift a pallet from a first, low position at the conveyor track to a second, raised position that is substantially vertical above the first position so that a second pallet can pass underneath the raised pallet. With this solution an object can be moved from the regular flow of a conveyor system, allowing the regular flow to continue without disruption. However, the lifting device only has the possibility of moving the objects in a substantially vertical movement and not horizontally along the whole conveying track, what limits the efficiency of the system.

Therefore, there is still a need in the art for an alternative pallet conveyance system that allows combining the advantages of the single-pallet system (use of automated pallets) with the advantages of the multipallet system (reduction of the overall machining time per part).

### BRIEF DISCLOSURE OF THE INVENTION

The present invention seeks to solve the aforementioned drawbacks of the prior art by disclosing a novel pallet conveyance system and method.

In a first aspect, the present invention discloses a pallet conveyance system of the type comprising:
- a first end through which an operator can access the system;
- a second opposite end, located remotely with respect to the operator;
- a lower conveyor;
- a lower base arranged on said lower conveyor for moving thereon between the first end and the second end, and suitable for placing a lower pallet thereon; and
- a plurality of machining stations located on the sides of the lower conveyor.

The system of the present invention further comprises:
- an upper base;
- overhead conveyance means coupled to the upper base and suitable for conveying said upper base between the first end and the second end, as well as between a high position and a low position, the low position being at the same level as the lower base; and
- a control unit to control the movement of the lower base and the upper base, as well as the operation of the machining equipment that will be located at said machining stations.

The system of the present invention allows the use of automated pallets since the movement thereof is performed on outbound and return (round trip) paths, like in the single-pallet system, and therefore there is no risk of entanglement of the required energy train cable carriers. Furthermore, by allowing the use of two pallets at the same time, the machining time per part is reduced by half compared to the single-pallet system of the prior art. Therefore, the pallet conveyance system of the present invention satisfactorily solves the problems of the prior art by disclosing an alternative system combining the advantages of known single-pallet and multipallet systems.

The overhead conveyance means, which allow moving the upper base (on which a second pallet will be located) between a high position and a low position, allow preventing a collision of both bases for pallets. The pallet located on the upper base will therefore pass through the different machining stations at the same level as the lower base, whereas it will temporarily move to its high position to prevent a collision with the lower base when both bases cross paths with one another.

According to a second aspect of the present invention, a method for conveying a pallet with a pallet conveyance system is disclosed, comprising:
- placing on a first pallet at least a first part to be machined;
- moving the first pallet on an outbound path from a first end close to an operator to a second opposite end located remotely with respect to the operator;
- moving the first pallet on a return path from the second end to the first end;
- performing at least one machining operation on the first part along the outbound path or the return path;
- placing on a second pallet at least a second part to be machined;
- moving the second pallet on an outbound path from the first end to the second end;
- moving the second pallet on a return path from the second end to the first end;
- performing at least one machining operation on the second part along the outbound path or the return path.

The method of the present invention further comprises the step of:
- temporarily moving the second pallet to a high position at least once on the outbound path and once on the return path to prevent the collision thereof with the first pallet.

Therefore, the method of the second aspect of the present invention (which is carried out by means of the pallet conveyance system of the first aspect of the present invention) solves the problems of the prior art since it allows the use of automated pallets (due to the outbound and return movement of the pallets there is no risk of entanglement of energy train cable carriers) while at the same time reduces the machining time per part by half compared to single-pallet systems.

### BRIEF DESCRIPTION OF THE DRAWINGS

The present invention will be better understood with reference to the following drawings illustrating a preferred embodiment of the invention, provided by way of example, and which must not be interpreted as limiting the invention in anyway.
Figure 1 shows a side view of a system according to the preferred embodiment of the present invention.
Figure 2 shows a perspective view of the system shown in Figure 1.
Figures 3A-3K show various steps of a method according to the preferred embodiment of the present invention using the system shown in Figures 1 and 2.

### Detailed Description of the Preferred Embodiments

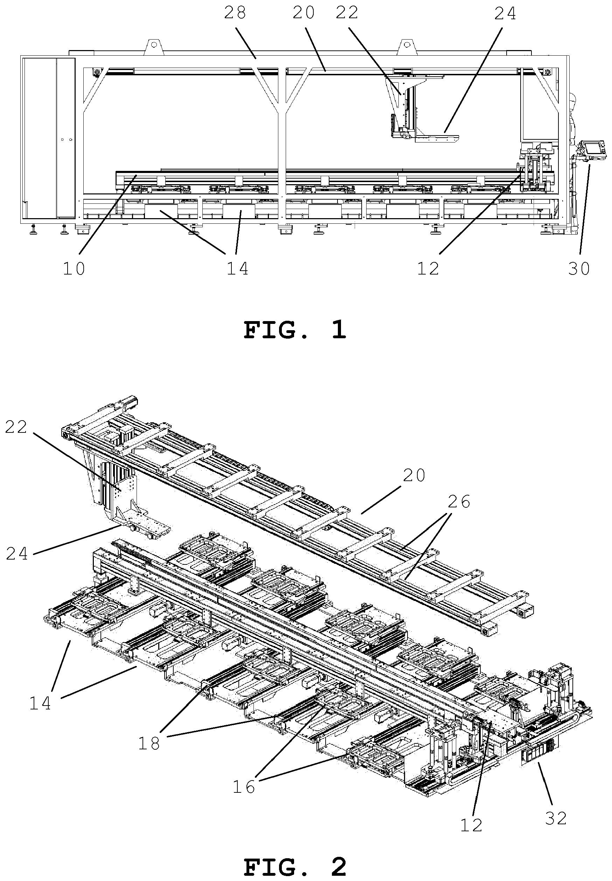

The pallet conveyance system according to the preferred embodiment of the present invention, shown in Figure 1, comprises a lower conveyor (10) on which a lower base (12) is arranged and which moves said lower base (12) between a first end through which an operator can access the system (on the right as shown in the drawings) and a second opposite end, located remotely with respect to the operator (on the left as shown in the drawings). The lower base (12) is suitable for placing a lower pallet thereon (not shown in the drawings). Said lower pallet can be of any suitable type known in the art, but preferably it is an automated pallet such as the one that will be described herein below.

A plurality of machining stations (14) is arranged along the course taken by the lower conveyor (10), and on both sides thereof (as best seen in Figure 2). As best seen in Figure 2, each machining station (14) comprises a platform (16) suitable for mounting thereon a piece of machining equipment (not shown in the drawings), for example a die cutter. The machining stations (14) also comprise a movement cylinder (18) and other movement means (guides, servomotors, connectors, terminal blocks, power supply, etc.) required for moving said platform (16) (and therefore the piece of machining equipment it supports) between a first position located remotely with respect to the lower conveyor (10) and a second machining position close to the lower conveyor (10). In the remote position, the piece of machining equipment allows the pallet to pass over the conveyor (10) without obstruction, whereas in the machining position the piece of machining equipment moves close enough to the pallet to perform the required the machining operation on the part(s) supported by the pallet.

The pallet conveyance system of the preferred embodiment of the present invention also comprises an upper conveyor (20) located in parallel above the lower conveyor (10). The upper conveyor (20) is coupled to a lifting column (22) arranged for moving along same between the first end and the second end, and for holding an upper base (24). The lifting column (22) allows moving the upper base (24) between a high position and a low position, where in this low position it is at the same level as the lower base (12) and where in the high position it is at a sufficient height to prevent a collision with the lower base (12).

The upper conveyor (20) preferably comprises two toothed belts (26), located parallel to one another, coupled to an upper portion of the lifting column (22) and the motion of which moves said lifting column (22) between the first end and the second end. Though not shown in the attached drawings, the lower conveyor (10) also preferably comprises two toothed belts similarly to the upper conveyor.

As can be seen in Figure 1, the conveyance system of the preferred embodiment of the present invention is preferably mounted on a chassis (28) providing stability and protection to the system. The system finally comprises a control interface (30) connected to a control unit (32). The control unit (32) allows controlling the movement of the lower base (12) on the lower conveyor (10) as well as the movement of the upper base (24) on the upper conveyor (20) and the lifting column (22) in a synchronized manner, such that the pallets supported by both bases (12, 24) pass through the machining stations (14) while at the same time the collision thereof is prevented. The control unit (32) also controls the operation of the machining equipment that will be located at said machining stations (14), as well as the automation of automated pallets located on each of the bases (12, 24) according to the preferred embodiment of the present invention.

The control interface (30) comprises information input means, such as for example buttons or a tactile screen, through which the operator can set up system operating parameters. According to the preferred embodiment, the control interface (30) also comprises display means (tactile screen, screen, etc.) which show the user the operating parameters currently set up, alarm situations, etc. of the system.

The pallets to be located on the lower base (12) and the upper base (24) can be the same or different, for example if two types of parts are to be machined simultaneously. Said pallets can be of the traditional type or, according to the preferred embodiment of the present invention, automated pallets. In this latter case, the automated pallets comprise, for example, an encoder verifying that the pallet has not moved laterally, sensors detecting movement, recognizers recognizing the part to be machined, pneumatic arms for straightening out the parts to be machined (for example in the case of gaskets, they are initially curved and must be straightened out in order to suitably make cuts), pneumatic attaching flanges, etc. All these automation elements of the system are connected to the control unit (32) described above by means of energy train cable carriers in a manner that is usually known by the skilled person.

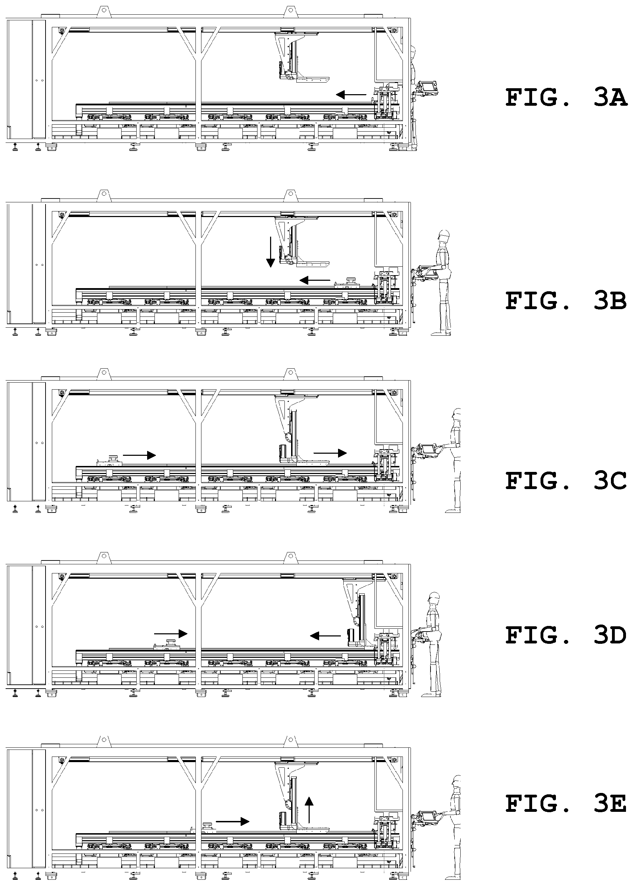

A pallet conveyance method according to the preferred embodiment of the present invention will now be described in reference to Figures 3A-3K. Throughout these Figures 3A-3K, the arrows indicate the motion of the corresponding base (12, 24). The first end close to the operator is the right end as shown in the drawings, whereas the second opposite end is the left end. As shown in the drawings, the outbound path is defined as the path going from right to left, whereas the return path is the path going from left to right.

In a first step (3A) the operator places at least a first part to be machined on a first pallet (not shown in the drawings for the sake of simplicity, located on the lower base). At this time, the upper base is in a raised position to prevent a collision with the lower base.

Then (Figure 3B) the first pallet (the lower base) moves on an outbound path from a first end close to an operator to a second opposite end located remotely with respect to the operator. As shown in this Figure 3B, once the lower base surpasses the point where the upper base is located, the upper base starts a downward motion.

In Figure 3C, the first pallet (lower base) starts to move on a return path from the second end to the first end. Along this return path, the lower base stops at each machining station to perform the corresponding machining operations on the first part.

As shown in Figure 3D, while the lower base continues to move on its return path performing the corresponding machining operations, the upper base supporting a second pallet reaches the first end, and then the operator places thereon at least a second part to be machined. Then the second pallet (upper base) starts to move on its outbound path.

To prevent a collision of the upper base and the lower base, the second pallet (upper base, Figure 3E) moves temporarily to a high position.

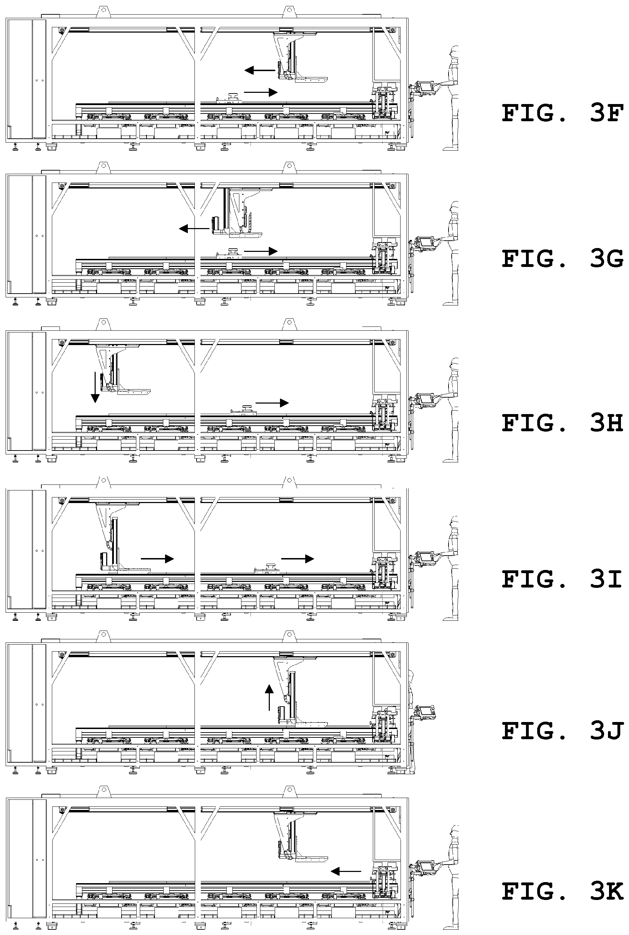

In Figures 3F and 3G, the second pallet (upper base) keeps moving on its outbound path, remaining in its high position to prevent a collision with the lower base. In turn, the first pallet (lower base) keeps moving, stopping at each machining station on its return path.

When it reaches the second end (Figure 3H), the second pallet (upper base) again moves to its low position.

Then (Figure 3I) the second pallet (upper base) starts to move on its return path, stopping at each machining station, following the first pallet (lower base).

When the first pallet (lower base) again reaches the first end (Figure 3J), the operator takes the machined parts out and places new parts to be machined thereon. In turn, the second pallet (upper base) again moves to its high position to prevent a collision with the lower base.

Finally, Figure 3K shows that the same initial situation shown in Figure 3A has been reached, showing the cyclical working of the method of the present invention. Therefore, the steps of the method described above are repeated again cyclically to complete the machining of all the desired parts.

As can be inferred from the detailed description above, the system and the method of the present invention provide several advantages with respect to the systems of the prior art. In fact, the time required per machined part is reduced by half with respect to the single-pallet systems of the prior art, as a result of the simultaneous use of two pallets with automatic synchronized motion such that their collision is prevented.

According to another embodiment, the system and method of the present invention also allow placing different parts to be machined on each of the pallets, such that two types of different parts can be produced simultaneously.

Although the present invention has been described in reference to a preferred embodiment thereof, the skilled person will understand that modifications and variations can be applied without departing from the scope of the present invention as defined by the appended claims. For example, although an upper toothed-belt conveyor with a lifting column has been described, it is possible to devise other embodiments of the invention using different overhead conveyance means coupled to the upper base and suitable for conveying said upper base between the first end and the second end, as well as between a high position and a low position, where the low position is at the same level as the lower base and where the high position is at such a height that it prevents a collision with the lower base. For example, said overhead conveyance means can be located on one side of the lower conveyor, instead of above same.

On the other hand, even though a method according to the preferred embodiment of the present invention has been described in which machining on the parts is performed during their return path to the operator, it must be understood that said machining can also be done during their outbound path without departing from the scope of the present invention as a result.

Furthermore, although a method according to the preferred embodiment of the present invention has been described in which most of the outbound path (on which the at least one machining operation is not performed) of the second pallet is in the high position, the skilled person will understand that said path can also be in the low position. In other words, according to another embodiment of the invention, the second pallet moves to its high position only to prevent a collision with the first pallet, and then it again moves to its low position before continuing its conveyance between the first and second ends.

## Claims

1. A pallet conveyance system of the type comprising:
- a first end through which an operator can access the system;
- a second opposite end;
- a lower conveyor (10);
- a lower base (12) arranged on said lower conveyor (10) for moving thereon between the first end and the second end, and suitable for placing a lower pallet thereon; and
- a plurality of machining stations (14) located on the sides of the lower conveyor (10);
**characterized in that** it further comprises:
- an upper base (24);
- overhead conveyance means coupled to the upper base (24) and suitable for conveying said upper base (24) between the first end and the second end, as well as between a high position and a low position, the low position being at the same level as the lower base (12); and
- a control unit (32) to control the movement of the lower base (12) and the upper base (24), as well as the operation of the machining equipment that will be located at said machining stations (14).

2. The conveyance system according to claim 1, **characterized in that** the overhead conveyance means comprise:
- an upper conveyor (20) located parallel above the lower conveyor (10);
- a lifting column (22) coupled to the upper conveyor (20) and arranged for moving along same between the first end and the second end;
the upper base (24) being held by the lifting column (22) and arranged to move between a high position and a low position, where in this low position it is at the same level as the lower base (12).

3. The conveyance system according to claim 2, **characterized in that** the upper conveyor (20) comprises two toothed belts (26), located parallel to one another, coupled to an upper portion of the lifting column (22) and the motion of which moves said lifting column (22) between the first end and the second end.

4. The conveyance system according to any of the preceding claims, **characterized in that** each machining station (14) comprises a platform (16) on which to install a piece of machining equipment, as well as movement means for moving said platform (16) between a first position located remotely with respect to the lower conveyor (10) and a second machining position close to the lower conveyor (10).

5. The conveyance system according to any of the preceding claims, **characterized in that** it further comprises a control interface (30) connected with the control unit (32), comprising information input means by means of which the operator can set up system operating parameters.

6. Method for conveying a pallet with a pallet conveyance system according to claim 1, comprising:
- placing on a first pallet at least a first part to be machined;
- moving the first pallet on an outbound path from a first end to a second opposite end;
- moving the first pallet on a return path from the second end to the first end;
- performing at least one machining operation on the first part along the outbound path or the return path;
- placing on a second pallet at least a second part to be machined;
- moving the second pallet on an outbound path from the first end to the second end;
- moving the second pallet on a return path from the second end to the first end;
- performing at least one machining operation on the second part along the outbound path or the return path;
- temporarily moving the second pallet to a high position at least once on the outbound path and once on the return path to prevent the collision thereof with the first pallet.

7. The method according to claim 6, **characterized in that** during any of the movement steps of the second pallet, while no machining operation is being performed, the course it takes is in the high position.

8. The method according to any of claims 6 and 7, **characterized in that** the steps of performing the at least one machining operation on the first part and the second part are performed along the return path.

## Patentansprüche

1. Palettenfördersystem der Art umfassend:
- ein erstes Ende, durch welches eine Bedienperson Zugang zum System haben kann;
- ein zweites entgegengesetztes Ende;
- einen unteren Förderer (10);
- eine untere Basis (12), welche auf dem genannten unteren Förderer (10) angeordnet ist, für deren Bewegung darauf zwischen dem ersten Ende und dem zweiten Ende, und dazu geeignet, eine untere Palette darauf zu platzieren; und
- eine Vielzahl von Bearbeitungsstationen (14), welche sich an den Seiten des unteren Förderers (10) befinden;
**dadurch gekennzeichnet, dass** es zusätzlich Folgendes umfasst:
- eine obere Basis (24);
- hochgelegte Fördermittel, welche mit der oberen Basis (24) gekoppelt sind und dazu geeignet sind, die genannte obere Basis (24) zwischen dem ersten Ende und dem zweiten Ende, sowie zwischen einer hohen Position und einer niedrigen Position zu fördern, wobei die niedrige Position auf der gleichen Höhe wie die untere Basis (12) liegt; und
- eine Steuereinheit (32) zur Steuerung der Bewegung der unteren Basis (12) und der oberen Basis (24), sowie des Betriebs der Bearbeitungseinrichtung, welche sich bei den genannten Bearbeitungsstationen (14) befinden wird.

2. Fördersystem nach Anspruch 1, **dadurch gekennzeichnet, dass** die hochgelegten Fördermittel Folgendes umfassen:
- einen oberen Förderer (20), welcher sich parallel über dem unteren Förderer (10) befindet;
- eine Hubsäule (22), welche mit dem oberen Förderer (20) gekoppelt ist und dazu angeordnet ist, sich entlang desselben zwischen dem ersten Ende und dem zweiten Ende zu bewegen;
wobei die obere Basis (24) von der Hubsäule (22) gehalten wird und dazu angeordnet ist, sich zwischen einer hohen Position und einer niedrigen Position zu bewegen, wobei diese niedrige Position auf der gleichen Höhe wie die untere Basis (12) liegt.

3. Fördersystem nach Anspruch 2, **dadurch gekennzeichnet, dass** der obere Förderer (20) zwei Zahnriemen (26) umfasst, welche sich parallel zueinander befinden, mit einem oberen Teil der Hubsäule (22) gekoppelt sind und deren Bewegung die genannte Hubsäule (22) zwischen dem ersten Ende und dem zweiten Ende bewegt.

4. Fördersystem nach einem der vorhergehenden Ansprüche, **dadurch gekennzeichnet, dass** jede Bearbeitungsstation (14) eine Plattform (16) umfasst, auf welcher eine Bearbeitungseinrichtung zu installieren ist, sowie Bewegungsmittel für das Bewegen der genannten Plattform (16) zwischen einer ersten Position, die sich in Bezug auf den unteren Förderer (10) entfernt befindet, und einer zweiten Bearbeitungsposition, welche nah am unteren Förderer (10) liegt.

5. Fördersystem nach einem der vorhergehenden Ansprüche, **dadurch gekennzeichnet, dass** es zusätzlich eine Steuerungsschnittstelle (30) umfasst, welche mit der Steuereinheit (32) verbunden ist, umfassend Informationseingabemittel mittels welcher die Bedienperson Betriebsparameter des Systems feststellen kann.

6. Verfahren zur Förderung einer Palette mit einem Palettenfördersystem nach Anspruch 1, umfassend:
- das Platzieren auf einer ersten Palette mindestens eines ersten zu bearbeitenden Teils;
- das Bewegen der ersten Palette auf einem Hinweg von einem ersten Ende zu einem zweiten entgegengesetzten Ende;
- das Bewegen der ersten Palette auf einem Rückweg vom zweiten Ende zum ersten Ende;
- das Durchführen mindestens eines Bearbeitungsvorgangs auf dem ersten Teil entlang des Hinwegs oder des Rückwegs;
- das Platzieren auf einer zweiten Palette mindestens eines zweiten zu bearbeitenden Teils;
- das Bewegen der zweiten Palette auf einem Hinweg vom ersten Ende zum zweiten Ende;
- das Bewegen der zweiten Palette auf einem Rückweg vom zweiten Ende zum ersten Ende;
- das Durchführen mindestens eines Bearbeitungsvorgangs auf dem zweiten Teil entlang des Hinwegs oder des Rückwegs;
- das zeitweise Bewegen der zweiten Palette zu einer hohen Position mindestens einmal auf dem Hinweg und einmal auf dem Rückweg, um das Zusammenprallen derselben mit der ersten Palette zu verhindern.

7. Verfahren nach Anspruch 6, **dadurch gekennzeichnet, dass** während jeder der Bewegungsschritte der zweiten Palette, wenn kein Bearbeitungsvorgang durchgeführt wird, den Verlauf den diese folgt ist in der hohen Position.

8. Verfahren nach einem der Ansprüche 6 und 7, **dadurch gekennzeichnet, dass** die Schritte des Durchführens mindestens eines Bearbeitungsvorgangs auf dem ersten Teil und dem zweiten Teil entlang des Rückwegs durchgeführt wird.

## Revendications

1. Système de transport de palette du type comprenant:
- une première extrémité à travers laquelle un opérateur peut accéder au système;
- une deuxième extrémité opposée;
- un convoyeur inférieur (10);
- une base inférieure (12) aménagée sur ledit convoyeur inférieur (10) pour se déplacer sur celui-ci entre la première extrémité et la deuxième extrémité, et appropriée pour la mise en place d'une palette inférieure sur celui-ci; et
- une pluralité de portes d'usinage (14) situées sur les côtés du transporteur inférieur (10);
**caractérisé en ce qu'**il comprend en outre:
- une base supérieure (24);
- des moyens de transport aérien couplés à la base supérieure (24) et appropriés pour transporter ladite base supérieure (24) entre la première extrémité et la deuxième extrémité, ainsi qu'entre une position haute et une position basse, la position basse étant au même niveau que la base inférieure (12); et
- une unité de commande (32) pour commander le déplacement de la base inférieur (12) et la base supérieure (24), ainsi que le fonctionnement de l'équipement d'usinage qui sera situé audits postes d'usinage (14).

2. Système de transport selon la revendication 1, **caractérisé en ce que** les moyens de transport aérien comprennent:
- un convoyeur supérieur (20) situé parallèlement au dessus du convoyeur inférieur (10);
- une colonne de levage (22) couplée au convoyeur supérieur (20) et aménagée pour se déplacer le long de celui-ci entre la première extrémité et la deuxième extrémité;
la base supérieure (24) étant soutenue par la colonne de levage (22) et aménagée pour se déplacer entre une position haute et une position basse, où dans cette position basse elle est au même niveau que la base inférieure (12).

3. System de transport selon la revendication 2, **caractérisé en ce que** le convoyeur supérieur (20) comprend deux courroies crantées (26), situées l'une parallèle à l'autre, couplées à une portion supérieure de la colonne de levage (22) et dont le déplacement déplace ladite colonne de levage (22) entre la première extrémité et la deuxième extrémité.

4. Système de transport selon l'une quelconque des revendications précédentes, **caractérisé en ce que** le poste d'usinage (14) comprend une plate-forme (16) sur laquelle on installe une pièce d'équipement d'usinage, ainsi que des moyens de déplacement pour déplacer ladite plate-forme (16) entre une première position située à distance par rapport au convoyeur inférieur (10) et une deuxième position d'usinage proche du convoyeur inférieur (10).

5. Système de transport selon l'une quelconque des revendications précédentes, **caractérisé en ce qu'**il comprend en outre une interface de commande (30) connectée à l'unité de commande (32), comprenant des moyens d'apport d'information par le biais desquels l'opérateur peut configurer les paramètres d'exploitation du système.

6. Procédé de transport d'une palette avec un système de transport de palettes selon la revendication 1, comprenant:
- la mise en place sur une première palette d'au moins une première partie à usiner;
- le déplacement de la première palette sur une voie de sortie d'une première extrémité à une deuxième extrémité opposée;
- le déplacement de la première palette sur une voie de retour de la première extrémité à la première extrémité;
- la réalisation d'au moins une opération d'usinage sur la première partie le long de la voie de sortie ou la voie de retour;
- la mise en place sur une deuxième palette d'au moins une deuxième partie à usiner;
- le déplacement de la deuxième palette sur une voie de sortie de la première extrémité à la deuxième extrémité;
- le déplacement de la deuxième palette sur une voie de retour de la deuxième extrémité à la première extrémité;
- la réalisation d'au moins une opération d'usinage sur la deuxième partie le long de la voie de sortie ou la voie de retour;
- le déplacement temporaire de la deuxième palette à une position haute au moins une fois sur la voie de sortie et une fois sur la voie de retour pour éviter sa collision avec la première palette.

7. Procédé selon la revendication 6, **caractérisé en ce que** pendant l'une quelconque des étapes de déplacement de la deuxième palette, tant qu'il n'y a pas d'opérations d'usinage, la route qu'elle prend celle de la position haute.

8. Procédé selon l'une quelconque des revendication 6 et 7, **caractérisé en ce que** les étapes de réalisation d'au moins une opération d'usinage sur la première partie et la deuxième partie sont réalisées le long de la voie de retour.
